# EUROPÄISCHE PATENTSCHRIFT

(11) **EP 1 516 781 B1**
(45) Veröffentlichungstag und Bekanntmachung des Hinweises auf die Patenterteilung: **02.09.2009**
(21) Anmeldenummer: 04021289.6
(22) Anmeldetag: 08.09.2004
(51) Int. Cl.: B60Q 1/06

(54) **Scheinwerfer für Fahrzeuge**
Headlamp for vehicle
Projecteur pour véhicule

(30) Priorität: 16.09.2003 DE 10342634
(43) Veröffentlichungstag der Anmeldung: 23.03.2005
(73) Patentinhaber: Hella KGaA Hueck & Co., 59552 Lippstadt (DE)
(72) Erfinder: Willeke, Franz-Josef, 59609 Anröchte (DE)

(56) Entgegenhaltungen:
- EP-A1- 0 469 947
- DE-A1- 3 937 636
- DE-A1- 4 042 119
- FR-A1- 2 609 763
- US-A- 5 915 831

## Beschreibung

Die Erfindung betrifft einen Scheinwerfer für Fahrzeuge mit einer Lichteinheit nach dem Oberbegriff des Patentanspruchs 1

Aus der EP 0 806 577 A1 ist ein Scheinwerfer für Fahrzeuge mit einer Lichteinheit bekannt, wobei ein langgestrecktes Verbindungselement zur Verstellung eines Reflektors vorgesehen ist. Das Verbindungselement weist einen Kugelkopf auf, der in eine Kugelaufnahme eingesetzt ist. Die Kugelaufnahme weist einen Gelenkschalenabschnitt zur Aufnahme des Kugelkopfes und an einer in Montagerichtung vorne angeordneten Verbindungsabschnitt auf. Der Verbindungsabschnitt weist mehrere widerhakenförmige Rastarme auf, mittels derer die Kugelaufnahme eine Montageöffnung des Reflektors hintergreift und klemmend gehalten ist. Die bekannte Kugelaufnahme ist relativ voluminös und herstellungsaufwändig.

Aus der DE 40 42 119 A1 ist ein Scheinwerfer für Fahrzeuge mit einer Lichteinheit bekannt, bei dem zur Aufnahme eines mit einem Kugelkopf versehenen langgestreckten Verbindungselementes eine rohrförmige Kugelaufnahme vorgesehen ist. Die Kugelaufnahme weist einen sphärischen Abschnitt zur Aufnahme des Kugelkopfes und einen in Montagerichtung vorne liegenden Verbindungsabschnitt auf, mittels dessen eine lösbare Verbindung der Kugelaufnahme in einer Montageöffnung der Lichteinheit erfolgen kann. Die Kugelaufnahme weist zwei sich von einer rückseitigen Öffnung der Kugelaufnahme erstreckende Schlitze auf zum Aufspreizen der Kugelaufnahme. Zum Verbinden der Kugelaufnahme in der Montageöffnung sind umfangsseitig des Verbindungsabschnittes Wiederhaken vorgesehen, die im Zusammenwirken mit einer von einer dem langgestreckten Verbindungsabschnitt abgekehrten Seite der die Montageöffnung umgebenden Wandung auf den Verbindungsabschnitt aufgesetzt und verriegelt wird. Hierdurch ist die Montage relativ aufwändig. Darüber hinaus ist die Kugelaufnahme relativ voluminös ausgebildet.

Aus der DE 88 15 840 U1 ist ein Scheinwerfer für Fahrzeuge mit einer Lichteinheit bekannt, bei der zur Verbindung eines mit einem Kugelkopf versehenen langgestreckten Verbindungselementes eine haarnadelförmige Kugelaufnahme vorgesehen ist, die rastend in einer Montageöffnung einer Wandung der Lichteinheit befestigt ist. Dadurch, dass die Kugelaufnahme einen sphärischen Abschnitt zur Aufnahme des Kugelkopfes einerseits und einen in Montagerichtung vorderen Verbindungsabschnitt andererseits aufweist, ist die Kugelaufnahme relativ voluminös. Die Wandung bzw. die Montageöffnung der Lichteinheit muss an die Haarnadelform des Verbindungsabschnittes angepasst sein. Hierdurch ist der Herstellungsaufwand relativ groß.

Aus der US 5 915 831 A ist ein Scheinwerfer für Fahrzeuge mit einer Lichteinheit bekannt, die mittels einer Verstelleinrichtung um eine horizontale und/oder vertikale Schwenkachse relativ zu einem Gehäuse verschwenkbar gelagert ist. Die Verstelleinrichtung umfasst ein langgestrecktes Verbindungselement mit einem Kugelkopf, der rastend in einer Gelenkschale gelagert ist. Die Gelenkschale weist einen Schlitz auf, der sich durchgehend von einer Kuppe der Gelenkschale bis zu einer dem Verbindungselement zugewandten Bodenseite derselben erstreckt. Zum Hintergreifen der Gelenkschale an einer rückseitigen Öffnung des Reflektors weist die Gelenkschale einen angeformten Rastarm auf, der über radial abstehende Rastnasen verfügt, so dass diese an einer Rückseite einer umlaufenden Schulter der Reflektoröffnung klemmend anliegen.

Aufgabe der vorliegenden Erfindung ist, einen Scheinwerfer für Fahrzeuge derart weiterzubilden, dass der Herstellungs- und Montageaufwand für die lösbare Befestigung eines mit einem Kugelkopf versehenen langgestrecktes Verbindungselementes an einer Wandung vermindert wird.

Zur Lösung dieser Aufgabe weist die Erfindung die Merkmale des Patentanspruchs 1 auf.

Der besondere Vorteil der Erfindung besteht darin, dass eine einfach herzustellende und einfach zu montierende Kugelaufnahme bereitgestellt wird, die kompakt und materialsparend ausgebildet ist. Erfindungsgemäß ist die Kugelaufnahme als eine sphärenförmige Gelenkschale ausgebildet, die über mindestens einen gekrümmten Schlitz sowie über mindestens einen entlang des Schlitzes verlaufenden Rastarm verfügt. Der Rastarm ermöglicht durch Hintergreifen einer die Montageöffnung begrenzenden Wandung der Lichteinheit mittels eines freien Endes des Rastarmes eine einfache Befestigung der Kugelaufnahme bzw. des Kugelkopfes in einer Montageöffnung. Die die Montageöffnung begrenzende Wandung erfordert - wie die Kugelaufnahme selbst - keine Hinterschnitte. Die Ausdehnung des Wandungsbereich der Aufnahmeöffnung in Montagerichtung kann relativ klein gewählt werden. Vorteilhaft kann einen schieberfreie Herstellung der Gelenkschale erfolgen. In der Montagestellung ist der Kugelkopf sicher in der Gelenkschale gehalten, wobei die Gelenkschale nicht auffedern kann. Hierdurch kann einer mechanischen Beanspruchung in vertikaler Richtung entgegengewirkt werden, so dass keine unerwünschte Lichtwandaufweitung bzw. kein vertikales Lichtzittern auftreten kann. Die Erfindung ermöglicht, dass zur Montage die Gelenkschale auf den Kugelkopf des bereits am Gehäuse befestigten Verbindungselementes aufgesetzt wird, bevor die Montageöffnung rastend auf die Gelenkschale aufgebracht wird.

Nach einer bevorzugten Ausführungsform der Erfindung sind der Gelenkschale mehrere gekrümmte Schlitze sowie mehrere Rastarme zugeordnet. Die Rastarme erstrecken sich von einer geschlossen Kuppe der Gelenkschale entlang des Schlitzes, wobei ein freies Ende des Rastarmes in einem solchen Abstand zu einer Basisseite der Gelenkschale, der abhängig ist von der Geometrie bzw. Dicke der die Montageöffnung umgebenden Wandung der Lichteinheit. Zur Fixierung der Gelenkschale hintergreifen die Rastarme die Wandung der Montageöffnung und bilden somit eine Rastverbindung der Gelenkschale innerhalb der Montageöffnung.

Nach einer Weiterbildung der Erfindung ist das freie Ende des Rastarmes und/oder eine umlaufende Schulter der Montageöffnung abgeschrägt ausgebildet. Vorteilhaft kann hierdurch ein Toleranzausgleich bei der Herstellung des Rastarmes bzw. der Wandung erfolgen.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine perspektivische Darstellung einer erfindungsgemäßen Kugelaufnahme, in deren rückseitiger Öffnung ein Kugelkopf eines langgestreckten Verbindungselementes einsetzbar und der zusammen mit dem Kugelkopf des Verbindungselementes in eine Montageöffnung eines Wandungsabschnitts der Lichteinheit fixierbar ist,

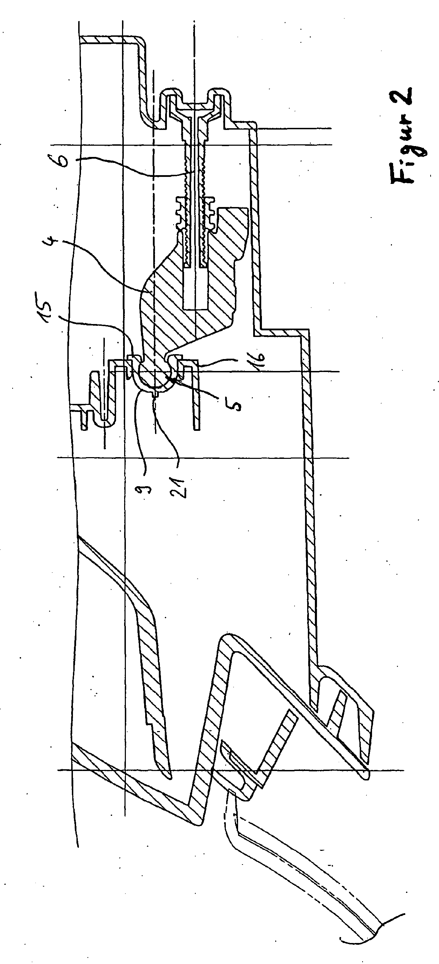

- Figur 2: einen teilweisen Vertikalschnitt durch einen Scheinwerfer in einem solchen Bereich, in dem der langgestreckte Verbindungsabschnitt mit seinem Kugelkopf zusammen mit der Kugelaufnahme in der Montageöffnung der Lichteinheit fixiert ist und
- Figur 3: einen teilweisen Horizontalschnitt durch den Verbindungsbereich gemäß Figur 2, in dem die Kugelaufnahme zusammen mit dem Kugelkopf des Verbindungselementes in der Montageöffnung der Lichteinheit fixiert ist.

Ein Scheinwerfer 1 für Fahrzeuge weist eine Lichteinheit 2 auf, die in einem Gehäuse 3 verstellbar gelagert ist. Zur Verstellung der einen Reflektor und eine Lichtquelle aufweisenden Lichteinheit 2 um einen horizontale und/oder vertikale Schwenkachse ist eine nicht dargestellte Antriebseinheit vorgesehen, die auf ein langgestrecktes Verbindungselement 4 mit einem endseitigen Kugelkopf 5 einwirkt. Das langgestreckte Verbindungselement 4 kann als Gewindestift ausgebildet sein, der zur Leuchtweitenregelung bzw. zur Erzeugung von Kurvenlicht durch eine elektrische Antriebseinheit in Drehung versetzt wird und somit in Längsrichtung verschoben werden kann. Alternativ kann das Verbindungselement 4 - wie im vorliegenden Ausführungsbeispiel - auch mechanisch mittels eines Werkzeugs betätigt werden zur Grundeinstellung des Reflektors 2. Zu diesem Zweck ist das Verbindungselement 4 längsverschieblich in Relation zu einer Gewindestange 6 gelagert, wobei das Verbindungselement 4 eine axiale Aufnahme 7 für die Gewindestange 6 aufweist.

Der Kugelkopf 5 des Verbindungselementes 4 ist in einer erfindungsgemäßen Kugelaufnahme 8 gelagert, die als eine sphärenförmige Gelenkschale 8 ausgebildet ist. Die Gelenkschale 8 besteht im wesentlichen aus einer kugelförmigen Mantelfläche 9 sowie einem Paar von sich an gegenüberliegenden Seiten von einer Kuppe 10 der Gelenkschale 8 zu einer Bodenseite 11 derselben hin weisenden Schlitzen 12 sowie Rastarmen 13. Alternativ können auch mehrere Rastarme 13 und Schlitze 12, beispielsweise drei, vorgesehen sein.

Die gegenüberliegenden Schlitze 12 erstrecken sich durchgehend von der Kuppe 10 der Gelenkschale 8 bis zur Bodenseite 11. Die Rastarme 13 erstrecken sich entlang der Schlitze 12 von der Kuppe 10 aus bis zu einem freien Ende 14, das beabstandet zu der Bodenseite 11 angeordnet ist. Die Länge der Rastarme 13 bzw. der Abstand der gegenüberliegenden freien Enden 14 der Rastarme 13 zu einem sich an der Bodenseite 11 erstreckenden Flansch 15 ist derart abgestimmt zu einem eine Montageöffnung 17 zur Aufnahme der Gelenkschale 8 umgebenden Wandungsabschnitt 16 des Reflektors 2, dass die Gelenkschale 8 in Montagerichtung 18 rastend in die Montageöffnung 17 eingreift. Dabei hintergreifen die Rastarme 13 eine umlaufende Schulter 19 des Wandungsabschnitts 16 und ermöglichen hierdurch eine klemmende Halterung der Gelenkschale 8 in der Montageöffnung 17. Die freien Enden 14 des Rastarmes 13 und/oder das freie Ende der Schulter 19 kann als Schrägfläche 20 ausgebildet sein, so dass Fertigungstoleranzen derselben ausgeglichen werden können. Im Bereich der Bodenseite 11 ist eine rückseitige Öffnung angeordnet, in die der Kugelkopf 5 eingesetzt wird.

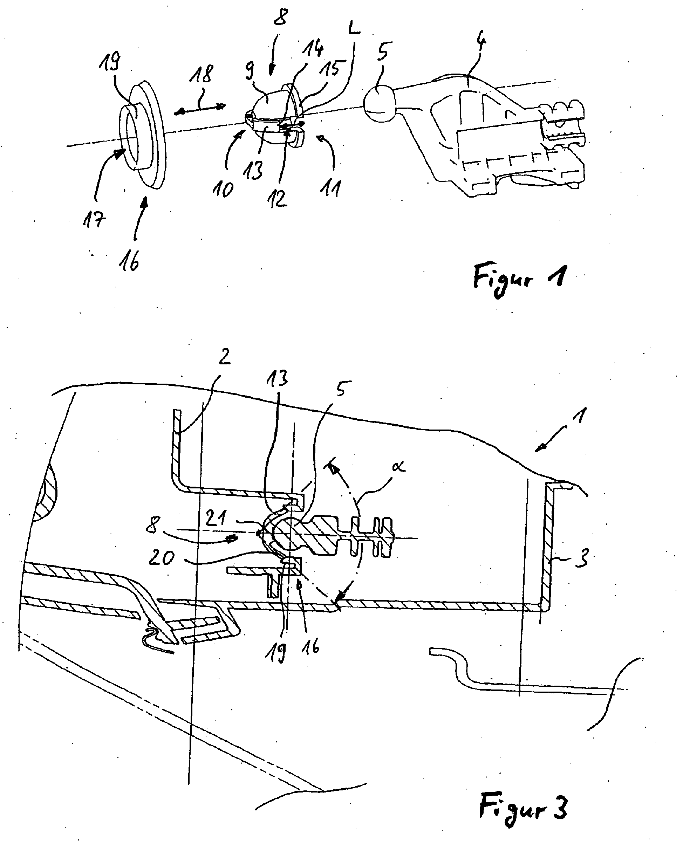

Der Wandungsabschnitt 16 des Reflektors 2, der in Figur 1 teilweise dargestellt ist, weist lediglich auf einer dem Verbindungselement 4 abgewandten Seite die Schulter 19 auf, deren Dicke auf die rastarmfreie Länge L des Schlitzes 12 ausgerichtet ist. Die umlaufende Schulter 19 des die Montageöffnung 17 aufweisenden Wandungsabschnitts 16 verhindert ein Aufweiten der Gelenkschale 8 bzw. ein Ausrasten des Kugelkopfes 5 aus der Gelenkschale 8.

Nach einer alternativen nicht dargestellten Ausführungsform kann auf eine Schulter 19 auch verzichtet werden. Herbei ist die Dicke des Wandungsabschnitts auf die Länge L des rastarmfreien Schlitzes 12 abgestimmt.

Wie besser aus Figur 1 zu ersehen ist, erstreckt sich das Paar von Rastarmen 13 bügelförmige in einem stumpfen oder überstumpfen Öffnungswinkelbereich α. Dabei stehen die Rastarme 13 mit ihrer Außenseite von der Mantelfläche 9 der Gelenkschale 8 nach außen hin ab. Hierdurch wird gewährleistet, dass eine sichere Fixierung der Gelenkschale 8 in der Montageöffnung 17 gewährleistet ist.

Die Kuppe 10 der Gelenkschale 8 ist geschlossen ausgebildet. An ihrer Außenseite ist ein wulstförmiger Ansatz 21 angeordnet, von dem sich die Rastarme 13 geradlinig oder bogenförmig im Bereich der jeweiligen Schlitze 12 erstrecken.

An der Bodenseite 11 ist das Flansch 15 um einen solchen Abstand radial nach innen gegenüber der Mantelfläche 9 angeordnet, dass ein sicherer Sitz des Kugelkopfes 5 in der Gelenkschale 8 gewährleistet ist.

Zur Montage wird die Gelenkschale 8 auf den Kugelkopf 5 des bereits am Gehäuse 3 befestigten Verbindungselementes 4 aufgesetzt. Nachfolgend wird der Reflektor 2 an dem Gehäuse 3 fixiert, wobei die Montageöffnung 17 des Wandungsabschnitts 16 rastend auf die Gelenkschale 8 aufgebracht wird. Die Gelenkschale 8 besteht, wie das Verbindungselement 4, aus einem Kunststoffmaterial. Es wird mit einem Werkzeug unter Ausbildung der Schlitze 12 und Rastarme 13 einstückig hergestellt.

## Patentansprüche

1. Scheinwerfer für Fahrzeuge mit einer Lichteinheit (2), die mittels einer Verstelleinrichtung um eine horizontale und/oder vertikale Schwenkachse relativ zu einem Gehäuse (3) gelagert ist, wobei die Verstelleinrichtung ein langgestrecktes Verbindungselement (4) mit einem Kugelkopf (5) aufweist, der in einer durch Verrastung in eine Montageöffnung (17) der Lichteinheit (2) mit derselben verbundenen Kugelaufnahme (8) gelagert ist, wobei die Kugelaufnahme (8) als eine sphärenförmige Gelenkschale (8) ausgebildet ist, die mindestens einen sich von einer den Kugelkopf (5) aufnehmenden rückseitigen Öffnung erstreckenden gekrümmten Schlitz (12) zum Aufspreizen der Gelenkschale (8) aufweist, wobei der Schlitz (12) sich durchgehend von einer Kuppe (10) der Gelenkschale (8) bis zu einer Bodenseite (11) derselben erstreckt und wobei entlang des Schlitzes (12) zumindest bereichsweise ein an die Gelenkschale (8) angeformter Rastarm (13) verläuft, **dadurch gekennzeichnet, dass** sich der Rastarm (13) von der Kuppe (10) der Gelenkschale (8) bis zu einem freien Ende (14) erstreckt, wobei das freie Ende (14) beabstandet zu der Bodenseite (11) angeordnet ist.

2. Scheinwerfer nach Anspruch 1, **dadurch gekennzeichnet, dass** sich der Rastarm (13) von einer vorderseitigen geschlossenen Kuppe (10) der Gelenkschale (8) entlang des Schlitzes (12) erstreckt.

3. Scheinwerfer nach Anspruch 1 oder 2, **dadurch gekennzeichnet, dass** eine umlaufende Schulter (19) des die Montageöffnung (17) aufweisenden Wandungsabschnitts (16) mit der Gelenkschale (8) zusammenwirkt, derart, dass ein Aufweiten der Gelenkschale (8) verhindert wird.

4. Scheinwerfer nach einem der Ansprüche 1 bis 3, **dadurch gekennzeichnet, dass** eine Mehrzahl von Rastarmen (13) bügelförmig einen stumpfen oder überstumpfen Öffnungswinkelbereich (α) überstreicht.

5. Scheinwerfer nach einem der Ansprüche 1 bis 4, **dadurch gekennzeichnet, dass** der Rastarm (13) mit einer Außenseite von der kugelförmigen Mantelfläche (9) der Gelenkschale (8) absteht.

6. Scheinwerfer nach einem der Ansprüche 1 bis 5, **dadurch gekennzeichnet, dass** die Kuppe (10) der Gelenkschale (8) einen wulstförmigen Ansatz (21) aufweist, an den sich die Rastarme (13) anschließen.

7. Scheinwerfer nach einem der Ansprüche 1 bis 6, **dadurch gekennzeichnet, dass** an einer Bodenseite (11) der Gelenkschale (8) ein Flansch (15) angeordnet ist und dass der Abstand des Flansches (15) zu einem freien Ende (14) des Rastarmes (13) derart auf die Dicke eines Wandungsabschnitts (16) der Montageöffnung (18) abgestimmt ist, dass die Rastarme (13) der Gelenkschale (8) dieselbe in der Montageposition verriegeln.

8. Scheinwerfer nach einem der Ansprüche 1 bis 7, **dadurch gekennzeichnet, dass** das freie Ende (14) der Rastarme (13) und/oder die umlaufende Schulter (19) des die Montageöffnung (17) aufweisenden Wandungsabschnitts (16) als eine Schrägfläche (20) ausgebildet sind.

9. Scheinwerfer nach einem der Ansprüche 1 bis 8, **dadurch gekennzeichnet, dass** die Gelenkschale (8) aus einem Kunststoffmaterial besteht.

10. Scheinwerfer nach einem der Ansprüche 1 bis 9, **dadurch gekennzeichnet, dass** das langgestreckte Verbindungselement (4) einen Gewindestift aufweist, der mit einer Antriebseinheit oder einem manuellen Werkzeug koppelbar ist, und dass die Lichteinheit einen Reflektor (2) aufweist, auf dessen Lage das Verbindungselement (4) als Stellelement einwirkt.

## Claims

1. Headlamp for vehicles comprising a light unit (2) which an adjustment mechanism is able to swivel around a horizontal and/or vertical axis in relation to a housing (3), wherein the adjustment mechanism has an elongated link piece (4) with a spherical head (5) which rests in a spherical dish (8) snapped into a mounting opening (17) of the light unit (2) to interconnect the adjustment mechanism and the light unit (2) such that the spherical dish (8) is shaped like a spherical disk joint (8) featuring on its rear at least one curved slot (12) for admitting the spherical head (5) into the disk joint (8) thereby spreading open the disk joint (8) such that the slot (12) cuts through the whole length from an apex (10) to a bottom end (11) of the disk joint (8) and such that a snapper leg (13) is molded to at least some of the disk joint (8) and extending along the slot (12), **characterized in that** the snapper leg (13) extends from the apex (10) of the disk joint (8) to a free end (14) such that the free end (14) is located at a distance from the bottom end (11).

2. Headlamp of claim 1, **characterized in that** the snapper leg (13) extends from a closed apex (10) at the front of the disk joint (8) and down the slot (12).

3. Headlamp of claim 1 or 2, **characterized in that** a circumferential shoulder (19) around the wall section (16) containing the mounting opening (17) interacts with the disk joint (8) such that a spreading open of the disk joint (8) is avoided.

4. Headlamp of claims 1 to 3, **characterized in that** a plurality of snapper legs (13) forms a bow shaped extending across an obtuse or over-obtuse range of the opening angle (α).

5. Headlamp of claims 1 to 4, **characterized in that** an outer face of the snapper leg (13) protrudes from the spherical surface area (9) of the disk joint (8).

6. Headlamp of claims 1 to 5, **characterized in that** the apex (10) of the disk joint (8) has a toric neck (21) that the snapper legs (13) are attached to.

7. Headlamp of claims 1 to 6, **characterized in that** a bottom end (11) of the disk joint (8) has a flange (15) and that the distance between the flange (15) and a free end (14) of the snapper leg (13) is adapted to the thickness of a wall section (16) of the mounting opening (18) such that the snapper legs (13) of the disk joint (8) lock said disk joint (8) in its mounting position.

8. Headlamp of claims 1 to 7, **characterized in that** the free ends (14) of the snapper legs (13) and/or the circumferential shoulder (19) of the wall section (16) containing the mounting opening (17) are designed to form a slanting face (20).

9. Headlamp of claims 1 to 8, **characterized in that** the disk joint (8) is made of a plastic material.

10. Headlamp of claims 1 to 9, **characterized in that** the elongated link piece (4) has a headless screw able to connect to a driving unit or a manual tool and that the light unit has a reflector (2) whose position is adjusted by using the link piece (4) as adjuster.

## Revendications

1. Projecteur pour véhicules avec une unité d'éclairage (2) logée à l'aide d'un dispositif de réglage autour d'un axe de pivotement horizontal et/ou vertical relatif par rapport à un boîtier (3), le dispositif de réglage présentant un élément d'assemblage (4) étiré en longueur avec une tête sphérique (5) logée par crantage dans un logement sphérique (8) relié dans une ouverture de montage (17) de l'unité d'éclairage (2) avec celle-ci, le logement sphérique (8) se présentant sous la forme d'une coque articulée (8) en forme de sphère présentant au moins une fente (12) courbée s'étirant d'une ouverture à l'arrière recevant la tête sphérique (5) en vue de l'écartement de la coque articulée (8), la fente (12) s'étirant en continu d'une calotte (10) de la coque articulée (8) jusqu'à un côté du fond (11) de celle-ci et où passe, le long de la fente (12) au moins par section, un bras cranté (13) de forme adaptée à la coque articulée (8), **caractérisé en ce que** le bras cranté (13) s'étire de la calotte (10) de la coque articulée (8) jusqu'à une extrémité libre (14), cette extrémité libre (14) se trouvant à l'écart du côté du fond (11).

2. Projecteur selon la revendication 1, **caractérisé en ce que** le bras cranté (13) s'étire à partir d'une calotte (10) fermée à l'avant de la coque articulée (8) le long de la fente (12).

3. Projecteur selon la revendication 1 ou 2, **caractérisé en ce qu'**un épaulement (19) de pourtour de la section de la paroi (16) présentant l'ouverture de montage (17) agit avec la coque articulée (8) de manière qu'un élargissement de la coque articulée (8) soit évité.

4. Projecteur selon l'une des revendications 1 à 3, **caractérisé en ce qu'**une multitude de bras crantés (13) couvrent à la forme d'un étrier une section d'angle d'ouverture (a) obtuse ou concave.

5. Projecteur selon l'une des revendications 1 à 4, **caractérisé en ce que** le côté extérieur du bras cranté (13) est en saillie de la gaine (9) en forme de sphère de la coque articulée (8).

6. Projecteur selon l'une des revendications 1 à 5, **caractérisé en ce que** la calotte (10) de la coque articulée (8) présente un appendice (21) en forme de renflement sur lequel se rattachent les bras crantés (13).

7. Projecteur selon l'une des revendications 1 à 6, **caractérisé en ce qu'**une bride (15) se trouve sur un côté du fond (11) de la coque articulée (8) et que l'écartement de la bride (15) par rapport à une extrémité libre (14) du bras cranté (13) est adapté de telle façon à l'épaisseur d'une section de paroi (16) de l'ouverture de montage (18) que les bras crantés (13) de la coque articulée (8) verrouillent cette dernière en position de montage.

8. Projecteur selon l'une des revendications 1 à 7, **caractérisé en ce que** l'extrémité libre (14) des bras de crantage (13) et/ou l'épaulement (19) de pourtour de la section de la paroi (16) présentant l'ouverture de montage (17) sont formés en tant que surface oblique (20).

9. Projecteur selon l'une des revendications 1 à 8, **caractérisé en ce que** la coque articulée (8) consiste en une matière plastique.

10. Projecteur selon l'une des revendications 1 à 9, **caractérisé en ce que** l'élément de liaison (4) étiré en longueur présente une tige filetée pouvant être couplée avec une unité d'entraînement ou un outil manuel et que l'unité d'éclairage présente un réflecteur (2) sur la position duquel l'élément de liaison (4) agit en tant qu'élément de réglage.
